# EUROPÄISCHE PATENTSCHRIFT

(11) **EP 1 221 387 B1**
(45) Veröffentlichungstag und Bekanntmachung des Hinweises auf die Patenterteilung: **07.03.2007**
(21) Anmeldenummer: 01129779.3
(22) Anmeldetag: 14.12.2001
(51) Int. Cl.: B60D 1/60

(54) **Schutzvorrichtung für die Kupplung zwischen zwei Fahrzeugen**
Protection device for the connection of two vehicles
Dispositif de protection pour la connection entre deux véhicules

(30) Priorität: 05.01.2001 DE 10100371
(43) Veröffentlichungstag der Anmeldung: 10.07.2002
(73) Patentinhaber: Baur, Lutz, 88339 Bad Waldsee (DE)
(72) Erfinder: Baur, Lutz, 88339 Bad Waldsee (DE)
(74) Vertreter: Eisele, Otten, Roth & Dobler

(56) Entgegenhaltungen:
- DE-A- 3 915 944
- DE-A- 19 802 629
- US-A- 3 420 549
- US-A- 4 226 438
- US-A- 5 941 551

## Beschreibung

Die Erfindung betrifft eine Vorrichtung nach dem Oberbegriff des Anspruchs 1.

Das Aneinanderkuppeln von Fahrzeugen birgt stets ein gewisses Gefahrenpotential in sich. So geschehen regelmäßig Unfälle beim Anhängen von Anhängern an Zugfahrzeuge, wenn die Bedienperson zwischen die Fahrzeuge tritt, um die Deichsel des Anhängers in die Maulkupplung des Zugfahrzeugs zu führen.

Wird die Maulkupplung des Zugfahrzeugs mit der Zugöse der Deichsel nicht getroffen, so besteht die Gefahr, dass die Deichsel beim Auftreffen auf die Heckbordwand des Zugfahrzeugs abgleitet, so dass der Anhänger auf das Zugfahrzeug auffahren kann. Die Bedienperson zwischen den Fahrzeugen befindet sich hierbei in Lebensgefahr, da es nicht immer gelingt, sich rechtzeitig aus dem Gefahrenbereich zu entfernen.

Das Abgleiten der Deichsel kann dabei seitlich oder unter das Zugfahrzeug stattfinden. Bei instabiler Bordwand besteht zudem die Gefahr, dass die Deichsel z.B. über einer Ladefläche in einen Ladebereich in das Zugfahrzeug eindringen kann, wodurch sich die gleiche Gefahr wie oben geschildert ergibt.

Besonders gefahrenträchtig ist in diesem Zusammenhang das Ankuppeln von Anhängern, die hangabwärts stehen und aufgrund ihres hohen Gewichts nur durch das Zugfahrzeug aufgehalten werden können.

Mit der Druckschrift DE-D 23970 II/63c - 30.05.1956 wurde eine Schutzvorrichtung bekannt, bei der am Anhänger oberhalb der Deichsel eine waagrecht liegende Stange mit einem Puffer befestigt wurde. Auf Höhe dieses Puffers wurde weiterhin an der Rückseite des Zugfahrzeugs eine Prallplatte mit zwei seitlich nach außen abstehenden Winkeln angebracht. Diese Schutzvorrichtung hat sich bislang nicht durchsetzen können.

Die Druckschrift US 4,226,438 offenbart eine Kugelkopfkupplung, wobei Leitflächen winklig zur Fahrtrichtung angeordnet sind. Derartige Kugelkopfkupplungen werden ausschließlich für Anhänger mit starrer Deichsel verwendet, bei der eine Abgleitgefahr für die Deichsel nicht vorhanden ist, da die Deichsel starr mit dem Anhänger verbunden ist.

Die Druckschrift US 5,941,551 betrifft eine Anhängerkupplung mit integriertem Einfangtrichter für die Anhängerdeichsel. Ein Einfangtrichter ist konisch ausgebildet beziehungsweise besteht ausschließlich aus geraden, schrägwinkelig angeordneten Prallflächen, in deren Zentrum eine Vertiefung beziehungsweise Kupplung zur Aufnahme einer Anhängerdeichsel oder dergleichen vorgesehen ist. Bei dieser Kupplung handelt es sich um eine komplette Baueinheit mit integriertem Einfangtrichter.

Nachteilig bei einer derartigen Kompletteinheit ist jedoch, dass diese zumindest im europäischen Bereich standardmäßig verwendeten und in zig-tausendfacher Ausführung bereits vorhandenen Maulkupplungen beziehungsweise Fahrzeugen nicht kompatibel ist.

Gegenüber diesem Stand der Technik hat die vorliegende Erfindung die Aufgabe, eine Schutzvorrichtung mit Kupplung vorzuschlagen, die die Sicherheit beim Ankuppeln erhöhen und handelsübliche Anhängekupplungen verwendbar sind und somit insbesondere auch zur Nachrüstung bereits bestehender Fahrzeuge beziehungsweise Maulkupplungen geeignet sind.

Diese Aufgabe wird ausgehend von einer Vorrichtung der einleitend genannten Art durch die kennzeichnenden Merkmale des Anspruchs 1 gelöst.

Durch die in den Unteransprüchen genannten Maßnahmen werden vorteilhafte Ausbildungen und Weiterbildungen der Erfindung möglich.

Dementsprechend zeichnet sich die Erfindung dadurch aus, dass die Kupplung als Maulkupplung ausgebildet ist, die entgegen der Fahrtrichtung von der Prallplatte absteht und die Prallplatte wenigstens einen von der Prallplatte abstehenden Höhenanschlag aufweist, um ein Abgleiten des Kupplungselements des anzukuppelnden Fahrzeugs von der Prallplatte zu verhindern.

Gemäß der Erfindung ist die Prallplatte auf Höhe der Kupplung angeordnet und mit wenigstens einem Höhenanschlag versehen, um ein Abgleiten des Kupplungselementes des anzukuppelnden Fahrzeugs an dem stehenden Fahrzeug zu verhindern. Eine derart ausgestaltete Prallplatte bewirkt einen wirksamen Auffahrschutz für die Bedienperson an der Kupplung, ohne dass ein zusätzlicher Puffer vorgesehen wird. Der Auffahrschutz ergibt sich dadurch, dass das Kupplungselement des einzukuppelnden Fahrzeugs beim Abgleiten an dem Höhenanschlag anschlägt und somit ein weiteres Abgleiten zuverlässig verhindert wird. Ein seitliches Abgleiten ist darüber hinaus durch die Seitenanschläge nicht möglich.

In einer besonderen Ausführungsform der Erfindung wird der Höhenanschlag als unterer Anschlag ausgebildet. In dieser Ausführungsform ist ein Unterfahren des Kupplungselementes des einzukuppelnden Fahrzeugs unter das feststehende Fahrzeug erfindungsgemäß verhindert. Es ist insbesondere beim Anhängen von Anhängern an Zug- und Schubfahrzeuge von Vorteil, bei denen die Deichsel des Anhängers nach unten hin beweglich ist, wie dies beispielsweise bei innerbetrieblich häufig verwendeten, sogenannten Flurförderfahrzeugen der Fall ist. Derartige Fahrzeuge sind in der Regel mit einer Maulkupplung zum Einkuppeln einer Deichselöse versehen.

Wird in diesem Fall die Maulkupplung von der Deichselöse nicht getroffen, so prallt die Deichsel auf die Prallplatte, von wo sie allenfalls bis zu einem der Anschläge abgleiten kann. Durch den zusätzlichen unteren Anschlag wird zuverlässig verhindert, dass die Deichsel das Zug- oder Schubfahrzeug unterfährt. Auf diese Weise bleibt gewährleistet, dass ein Abstand zwischen beiden Fahrzeugen durch die Deichsellänge gesichert ist. Die Dimensionierung der Prallplatte ist hierbei so vorzunehmen, dass auch bei abgewinkelter Deichsel beim Auftreffen auf einen der Anschläge ein ausreichender Sicherheitsabstand zwischen beiden Fahrzeugen besteht, der ein Einquetschen der Bedienperson verhindert.

In einer Weiterbildung der Erfindung wird zusätzlich ein oberer Anschlag vorgesehen. Ein solcher oberer Anschlag ist dann sinnvoll, wenn die Deichselaufhängung der Deichsel ein Spiel nach oben bis nahe an die Senkrechtstellung erlaubt oder wenn der Aufbau des entsprechenden Zug- oder Schubfahrzeugs auch ein Überfahren der Deichsel ermöglicht, beispielsweise bei einer Ladepritsche mit fehlender oder instabiler abschließender Bordwand. In diesem Fall wird die Deichsel bei einem Abgleiten nach oben durch den oberen Anschlag gefangen, wobei der erfindungsgemäße Sicherheitsabstand gewährleistet ist.

In einer bevorzugten Ausführungsform der Erfindung wird der obere und/oder der untere Anschlag als streifenförmiger Steg ausgebildet. Hierdurch wird zum einen die erfindungsgemäße Sicherheitswirkung für beliebig dimensionierte Kupplungselemente, beispielsweise Deichselösen gewährleistet. Die Ausbildung eines Anschlags als streifenförmiger Steg vereinfacht zudem die Fertigung und erhöht die Stabilität.

In einer weiteren vorteilhaften Weiterbildung der Erfindung wird ein durchgehender umlaufender Anschlagrahmen vorgesehen. Ein solcher Anschlagrahmen, der beispielsweise durch eine geschlossene Verbindung von vier streifenförmigen Anschlägen, d.h. den beiden Seitenanschlägen sowie dem oberen und dem unteren Anschlag herstellbar ist, sichert das aufprallende Kupplungselement in alle möglichen Abgleitrichtungen ab und ist durch seine geschlossene Form von großer Stabilität.

Die erfindungsgemäße Ausgestaltung einer Prallplatte mit umlaufenden Anschlagrahmen ist jedoch nicht auf eine viereckige Form begrenzt, es könnte beispielsweise auch eine ovale oder kreisförmige Ausbildung vorgesehen werden. Auch eine Kegelform der Prallplatte ist mit der Erfindung ohne weiteres zu vereinbaren.

Wesentlich ist, dass die Seitenanschläge so dimensioniert und ausgerichtet sind, dass beim Aufprallen des Kupplungselements, wie z.B. einer Deichselöse einer Anhängerdeichsel, dieses zuverlässig gefangen wird.

Hierfür ist es von Vorteil, die erfindungsgemäßen Anschläge senkrecht zur Prallplatte oder zur Kupplung hin geneigt anzuordnen. Durch eine solche Anordnung wird gewährleistet, dass das aufprallende Kupplungselement den Widerstand des Anschlags nicht überwinden kann, da es auf den Anschlag unter deutlich spitzerem Winkel trifft als im Falle seitwärts nach außen geneigter Anschlagelemente.

Die oben genannte Winkelanordnung ist auch auf einen geschlossenen Anschlagrahmen übertragbar, so dass in einer besonderen Ausführungsform der Anschlagrahmen durchgehend wenigstens senkrecht oder zur Kupplung hin geneigt ausgebildet wird.

Grundsätzlich kann die erfindungsgemäße Prallplatte an allen geeigneten Konstruktionselementen eines Fahrzeugs befestigt werden, solange sichergestellt ist, dass bei einem Verfehlen der Kupplung das aufprallende Kupplungselement die Prallplatte trifft. Um dies sicherzustellen, wird die Prallplatte jedoch vorteilhafterweise zwischen dem die Prallplatte tragenden Fahrzeug und dem zugehörigen Kupplungselement angebracht. Die Prallplatte liegt somit in Aufprallrichtung gesehen hinter der Kupplung, wodurch zuverlässig gewährleistet ist, dass ein die Kupplung verfehlendes Kupplungselement sicher auf die Prallplatte auftrifft.

Die Montage der erfindungsgemäßen Vorrichtung kann hierbei erheblich vereinfacht werden, wenn die gleichen Befestigungselemente verwendet werden, die zur Befestigung der Kupplung dienen. Wird beispielsweise eine Maulkupplung am Heck eines Fahrzeugs mit Schraubbolzen verschraubt, so kann eine erfindungsgemäße Schutzvorrichtung ohne weiteres hinter die Maulkupplung gelegt und gemeinsam mit dieser verschraubt werden, wobei gegebenenfalls die entsprechenden Bohrungen in der Prallplatte vorzusehen sind.

In einer anderen ebenfalls vorteilhaften Ausführungsform wird die Schutzvorrichtung und die Fahrzeugkupplung als Baueinheit ausgebildet, die als Ganzes zu montieren ist. So kann beispielsweise eine Maulkupplung mit der Prallplatte einer erfindungsgemäßen Schutzvorrichtung verschweißt sein. Die fahrzeugseitige Montage erfolgt dabei wiederum in einem Montageschritt, indem die komplette Baueinheit befestigt wird.

Ein Ausführungsbeispiel der Erfindung ist in der Zeichnung dargestellt und wird anhand der Figuren nachfolgend näher erläutert.

Im Einzelnen zeigen
- Figur 1: eine Draufsicht auf eine erfindungsgemäße Schutzvorrichtung,
- Figur 2: eine Seitenansicht einer erfindungsgemäßen Schutzvorrichtung,
- Figur 3: eine Schnittdarstellung einer erfindungsgemäßen Schutzvorrichtung,
- Figur 4: eine skizzenhafte Draufsicht auf ein Fahrzeuggespann mit erfindungsgemäßer Schutzvorrichtung und
- Figur 5: eine Draufsicht auf ein Fahrzeuggespann ohne erfindungsgemäße Schutzvorrichtung.

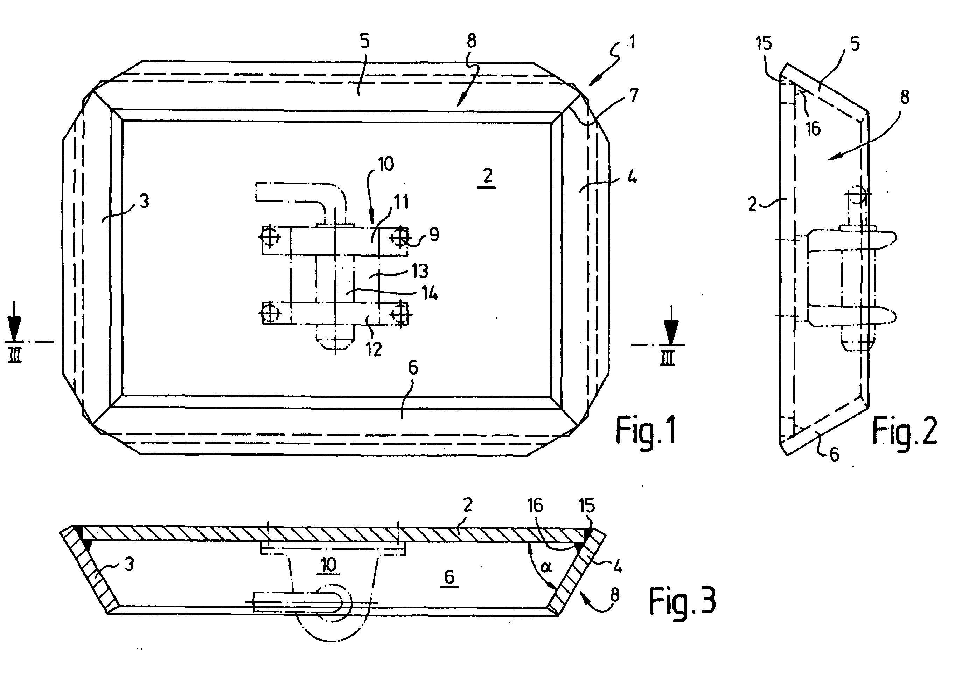

Die Vorrichtung 1 gemäß Figur 1 umfasst eine Prallplatte mit zwei Seitenanschlägen 3, 4 sowie einem oberen Anschlag 5 und einem unteren Anschlag 6. Die Anschläge 3, 4, 5, 6 sind an ihren Verbindungsstellen 7 zu einem umlaufenden geschlossenen Anschlagrahmen 8 verschweißt. Mittig sind vier Bohrungen 9 in der Prallplatte 2 angebracht, die zur Montage der Schutzvorrichtung 1 dienen.

Im vorliegenden Ausführungsbeispiel sind die Bohrungen 9 so angeordnet, dass sie dem Bohrbild einer Maulkupplung 10 entsprechen, deren Position mit gestrichelten Linien dargestellt ist.

Die Maulkupplung 10 umfasst einen oberen und unteren Schenkel 11, 12, die über eine Grundplatte 13 verbunden sind und die eine Bohrung für einen Steckbolzen 14 aufweisen. Die nicht näher dargestellte Zugöse einer Anhängerdeichsel kann in die Maulkupplung 10 zwischen die Schenkel 11, 12 eingeführt und anschließend durch Einstecken des Steckbolzens 14 fixiert werden.

In den Figuren 2 und 3 ist erkennbar, dass der aus den Anschlägen 3, 4, 5, 6 bestehende Anschlagrahmen 8 in einem Winkel α zur Prallplatte 2 angeordnet ist, der kleiner als 90° ist. Die Anschläge 3, 4, 5, 6 sind somit zur Maulkupplung 10 hingeneigt. Eine auf der Prallplatte 2 abgleitende Deichsel wird daher in einem spitzen Winkel α auf einen der Anschläge 3, 4, 5, 6 treffen und nicht in der Lage sein, den jeweiligen Anschlag zu überwinden.

In der vorliegenden Ausführungsform bestehen die Prallplatte 2 sowie die beiden Anschläge 3, 4, 5, 6 aus massiven Blechen, die umlaufend mit einer äußeren Schweißnaht 15 und einer inneren Schweißnaht 16 verschweißt sind. Auch die Verbindungsstelle 7 kann in Form einer Schweißnaht realisiert werden.

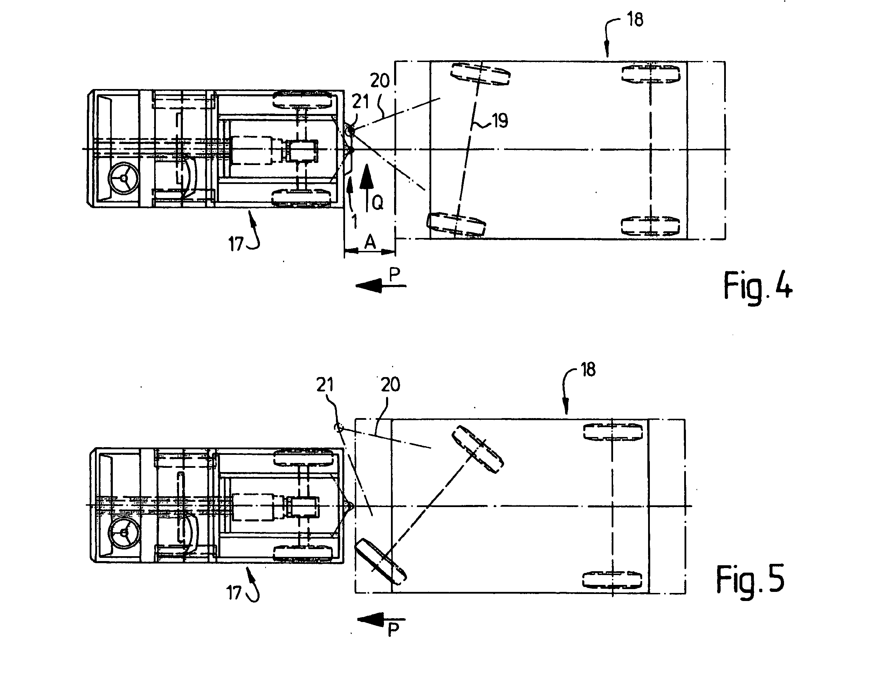

Die Funktion der Schutzvorrichtung 1 wird in Figur 4 veranschaulicht. Die Schutzvorrichtung 1 ist an einem Zugfahrzeug 17 angebracht, an das ein Anhänger 18 anzuhängen ist.

Der Anhänger 18 weist eine Vorderachse 19 auf, die über eine nur gestrichelt angedeutete Deichsel 20 in üblicher Weise drehbar ist, um den Anhänger 18 zu lenken. Im vorderen Endbereich der Deichsel 20 befindet sich eine Zugöse 21, die zur Aufnahme in eine Maulkupplung 10 gedacht ist.

In der dargestellten Situation gemäß Figur 4 wird der Anhänger 18 durch die Schutzvorrichtung 1 aufgehalten. Beim Anhängen begibt sich häufig eine Bedienperson zwischen die beiden Fahrzeuge 17, 18, um nach dem Lösen der üblicherweise vorhandenen Anhängerbremse an der Deichsel 20 den Anhänger 18 an das Zugfahrzeug 17 heranzulenken und die Zugöse 21 in die Maulkupplung einzuführen. Im dargestellten Fall gemäß Figur 4 wurde die Maulkupplung 10 offensichtlich verfehlt, so dass die Deichsel aufgrund der Vorwärtsbewegung des Anhängers 18 in Richtung des Pfeils P in Querrichtung, d.h. in Richtung des Pfeils Q auf der Prallplatte 2 der Schutzvorrichtung 1 seitwärts abgeglitten ist. Das Abgleiten wurde aufgehalten durch den Seitenanschlag 4, wodurch zugleich der Anhänger 18 mit seiner Vorwärtsbewegung gestoppt ist. Somit ist ein Mindestabstand A gewährleistet, der eine Sicherheitszone für die Bedienperson bildet.

In Figur 5 ist der bisherige Fall ohne Schutzvorrichtung 1 dargestellt. Durch die Vorwärtsbewegung des Anhängers 18 hat sich die Deichsel 20 seitwärts weggedreht, während die Zugöse 21 am Heck des Fahrzeugs entlanggeglitten ist. Dabei ist der Anhänger 18 nahezu vollständig auf das Zugfahrzeug 17 aufgefahren, bis er an der Maulkupplung 10 angestoßen ist. Eine Bedienperson, die sich zwischen diesen beiden Fahrzeugen 17, 18 gemäß Figur 5 befindet und sich nicht rechtzeitig aus dem Zwischenraum zwischen Zugfahrzeug 17 und Anhänger 18 entfernen kann, wird zwischen den beiden Fahrzeugen 17, 18 eingequetscht. Je nach Hangneigung und Anhängerlast kann dabei Lebensgefahr für die Bedienperson bestehen.

Die erfindungsgemäße Schutzvorrichtung benötigt keinerlei Anpassung an dem anzukuppelnden Anhänger 18 und ist auch als Nachrüstteil einfach an bestehende Kupplungen 10 von Zugfahrzeugen 17 anzubringen.

Die Erfindung ist nicht beschränkt auf die Konstellation des Ausführungsbeispiels eines Zugfahrzeugs mit einem Anhänger, sondern ist überall dort sinnvoll einzusetzen, wo zwei Fahrzeuge miteinander zu kuppeln sind und die Gefahr besteht, dass durch Weggleiten eines Kupplungselementes kein Mindestabstand für etwaige Bedienpersonen gewährleistet ist, d.h. beispielsweise auch an Schubfahrzeugen.

### Bezugszeichenliste:

- 1: Vorrichtung
- 2: Prallplatte
- 3: Seitenanschlag
- 4: Seitenanschlag
- 5: oberer Anschlag
- 6: unterer Anschlag
- 7: Verbindungsstellen
- 8: Anschlagrahmen
- 9: Bohrung
- 10: Maulkupplung
- 11: Schenkel
- 12: Schenkel
- 13: Grundplatte
- 14: Steckbolzen
- 15: äußere Schweißnaht
- 16: innere Schweißnaht
- 17: Zugfahrzeug
- 18: Anhänger
- 19: Vorderachse
- 20: Deichsel
- 21: Zugöse

## Patentansprüche

1. Vorrichtung bestehend aus einer Schutzvorrichtung (1) und einer Kupplung (10) zwischen zwei Fahrzeugen, insbesondere für die Anhängerkupplung eines Zug- oder Schubfahrzeugs, wobei eine auf Höhe der Kupplung (10) angeordnete Prallplatte (2) mit seitlichen Anschlägen vorgesehen ist, um ein anzukuppelndes Fahrzeug aufzuhalten, **dadurch gekennzeichnet, dass** die Kupplung (10) als Maulkupplung (10) ausgebildet ist, die entgegen der Fahrtrichtung von der Prallplatte (2) absteht und die Prallplatte (2) wenigstens einen von der Prallplatte (2) abstehenden Höhenanschlag (3 - 6) aufweist, um ein Abgleiten des Kupplungselements des anzukuppelnden Fahrzeugs von der Prallplatte (2) zu verhindern.

2. Vorrichtung nach Anspruch 1, **dadurch gekennzeichnet, dass** der Höhenanschlag als unterer Anschlag (6) ausgebildet ist.

3. Vorrichtung nach Anspruch 1 oder 2, **dadurch gekennzeichnet, dass** zusätzlich ein oberer Anschlag (5) vorgesehen ist.

4. Vorrichtung nach einem der vorgenannten Ansprüche, **dadurch gekennzeichnet, dass** der obere und/oder der untere Anschlag (5, 6) als streifenförmiger Steg ausgebildet ist.

5. Vorrichtung nach einem der vorgenannten Ansprüche, **dadurch gekennzeichnet, dass** ein durchgehender umlaufender Anschlagrahmen (3, 4, 5, 6) vorgesehen ist.

6. Vorrichtung nach einem der vorgenannten Ansprüche, **dadurch gekennzeichnet, dass** der oder die Anschläge (3, 4, 5, 6) senkrecht zur Prallplatte (2) oder zur Kupplung (10) hin geneigt angeordnet sind.

7. Vorrichtung nach einem der vorgenannten Ansprüche, **dadurch gekennzeichnet, dass** der Anschlagrahmen (3, 4, 5, 6) durchgehend senkrecht zur Prallplatte (2) angeordnet ist.

8. Vorrichtung nach einem der vorgenannten Ansprüche, **dadurch gekennzeichnet, dass** der Anschlagrahmen (3, 4, 5, 6) durchgehend zur Kupplung (10) hin geneigt ausgebildet ist.

9. Vorrichtung nach einem der vorgenannten Ansprüche, **dadurch gekennzeichnet, dass** die Prallplatte (2) zwischen dem zugehörigen Fahrzeug (17) und der entsprechenden Kupplung (10) anbringbar ist.

10. Vorrichtung nach einem der vorgenannten Ansprüche, **dadurch gekennzeichnet, dass** sie mit den gleichen Befestigungselementen (9) wie die zugehörige Fahrzeugkupplung (10) am Fahrzeug (17) befestigbar ist.

11. Vorrichtung nach einem der vorgenannten Ansprüche, **dadurch gekennzeichnet, dass** die Schutzvorrichtung (1) und die Fahrzeugkupplung (10) als Baueinheit ausgeführt sind.

12. Fahrzeug, **dadurch gekennzeichnet, dass** eine Vorrichtung nach einem der vorgenannten Ansprüche vorgesehen ist.

13. Fahrzeug nach Anspruch 12, **dadurch gekennzeichnet, dass** die Schutzvorrichtung mit den gleichen Befestigungselementen (9) wie die Fahrzeugkupplung (10) an dem Fahrzeug (17) befestigt ist.

## Claims

1. Device consisting of a protection device (1) and a coupling (10) between two vehicles, in particular for coupling a pulling or pushing vehicle, whereby a baffle plate (2) arranged at the level of the coupling (10) is provided with lateral stops in order to stop a vehicle to be coupled, **characterised in that** the coupling (10) is designed as a jaw coupling (10), which projects from the baffle plate (2) opposite the direction of travel and the baffle plate (2) comprises at least one height stop (3-6) projecting from the baffle plate (2) in order to prevent the coupling element of the vehicle to be coupled from sliding off the baffle plate (2).

2. Device according to claim 1, **characterised in that** the height stop is in the form of a lower stop (6).

3. Device according to claim 1 or 2, **characterised in that** in addition an upper stop (5) is provided.

4. Device according to one of the preceding claims, **characterised in that** the upper and/or the lower stop (5, 6) is designed as a strip-like web.

5. Device according to one of the preceding claims, **characterised in that** a continuous peripheral stop frame (3, 4, 5, 6) is provided.

6. Device according to one of the preceding claims, **characterised in that** the stop or stops (3, 4, 5, 6) are arranged perpendicular to the baffle plate (2) or inclined towards the coupling (10).

7. Device according to one of the preceding claims, **characterised in that** the stop frame (3, 4, 5, 6) is arranged to be continuously perpendicular to the baffle plate (2).

8. Device according to one of the preceding claims, **characterised in that** the stop frame (3, 4, 5, 6) is designed to be inclined continuously to the coupling (10).

9. Device according to one of the preceding claims, **characterised in that** the baffle plate (2) can be attached between the allocated vehicle (17) and the corresponding coupling (10).

10. Device according to one of the preceding claims, **characterised in that** it can be secured with the same securing elements (9) as the allocated vehicle coupling (10) onto the vehicle (17).

11. Device according to one of the preceding claims, **characterised in that** the protection device (1) and the vehicle coupling (10) are designed as a structural unit.

12. Vehicle **characterised in that** a device is provided according to one of the preceding claims.

13. Vehicle according to claim 12, **characterised in that** the protection device is secured onto the vehicle (17) by the same securing elements (9) as the vehicle coupling (10).

## Revendications

1. Dispositif comprenant un dispositif de protection (1) et un accouplement (10) entre deux véhicules, destiné notamment à l'attelage d'un véhicule tracteur ou d'un véhicule pousseur, une plaque de tamponnement (2) pourvue de butées latérales agencée au niveau de l'accouplement (10) étant prévue pour retenir un véhicule à atteler,
**caractérisé en ce que** l'accouplement (10) est réalisé sous la forme d'un accouplement à fourche (10) qui s'écarte de la plaque de tamponnement (2) dans le sens inverse du sens de déplacement, et la plaque de tamponnement (2) présente au moins une butée de hauteur (3 - 6) s'écartant de la plaque de tamponnement (2) pour empêcher l'élément d'accouplement du véhicule à atteler de glisser de la plaque de tamponnement (2).

2. Dispositif selon la revendication 1,
**caractérisé en ce que** la butée de hauteur est réalisée sous la forme d'une butée inférieure (6).

3. Dispositif selon la revendication 1 ou 2,
**caractérisé en ce qu'**il est prévu en outre une butée supérieure (5).

4. Dispositif selon l'une des revendications précédentes,
**caractérisé en ce que** la butée supérieure et/ou inférieure (5, 6) est réalisée sous la forme d'une nervure en forme de bande.

5. Dispositif selon l'une des revendications précédentes,
**caractérisé en ce qu'**il est prévu un cadre de butée (3, 4, 5, 6) périphérique continu.

6. Dispositif selon l'une des revendications précédentes,
**caractérisé en ce que** la ou les butées (3, 4, 5, 6) sont agencées inclinées verticalement par rapport à la plaque de tamponnement (2) ou à l'accouplement (10).

7. Dispositif selon l'une des revendications précédentes,
**caractérisé en ce que** le cadre de butée (3, 4, 5, 6) est agencé en continu verticalement par rapport à la plaque de tamponnement (2).

8. Dispositif selon l'une des revendications précédentes,
**caractérisé en ce que** le cadre de butée (3, 4, 5, 6) est réalisé incliné en continu par rapport à l'accouplement (10).

9. Dispositif selon l'une des revendications précédentes,
**caractérisé en ce que** la plaque de tamponnement (2) peut être installée entre le véhicule concerné (17) et l'accouplement (10) correspondant.

10. Dispositif selon l'une des revendications précédentes,
**caractérisé en ce qu'**il peut être fixé sur le véhicule (17) avec les mêmes éléments de fixation (9) que l'accouplement de véhicule concerné (10).

11. Dispositif selon l'une des revendications précédentes,
**caractérisé en ce que** le dispositif de protection (1) et l'accouplement de véhicule (10) se présentent sous la forme d'une unité modulaire.

12. Véhicule,
**caractérisé en ce qu'**il est prévu un dispositif selon l'une des revendications précédentes.

13. Véhicule selon la revendication 12,
**caractérisé en ce que** le dispositif de protection est fixé sur le véhicule (17) avec les mêmes éléments de fixation (9) que l'accouplement de véhicule (10).
